# EUROPEAN PATENT SPECIFICATION

(11) **EP 2 648 303 B1**
(45) Date of publication and mention of the grant of the patent: **03.06.2015**
(21) Application number: 12290117.6
(22) Date of filing: 02.04.2012
(51) Int. Cl.: H02J 3/14

(54) **Method of controlling the energy consumption in an energy network**
Verfahren zur Steuerung des Energieverbrauchs in einem Energienetzwerk
Procédé de contrôle de la consommation d'énergie dans un réseau d'énergie

(43) Date of publication of application: 09.10.2013
(60) Divisional application: 14191983.7
(73) Proprietor: ALCATEL LUCENT, 92100 Boulogne-Billancourt (FR)
(72) Inventor: Raehmer, Silke, 75428 Illingen (DE); Kopp, Dieter, 75428 Illingen (DE)
(74) Representative: Sciaux, Edmond

(56) References cited:
- EP-A1- 2 159 749
- DE-A1- 19 850 496

## Description

### Field of invention

The present invention relates to the field of energy networks and, more specifically, to a method of controlling the energy consumption in an energy network, to a home energy box, a data processing unit and a substation used to implement the method of controlling the energy consumption in the energy network.

### Background

In an energy network, there is a need of managing the demand of energy within the energy network which means to manage a balance between the generation and the consumption of energy within the energy network and there is a need of handling the energy consumption at the residential users, which are provided with energy within the energy network, in accordance with the demand managing in the energy network and of billing the energy consumed at the residential users.

Nowadays, energy demand management concepts are required which intelligently adapt the generated and the consumed energy within an energy network by in particular collecting information about both the generated and the consumed energy and furthermore by trying to influence the consumption of energy in accordance with the generated energy and inversely. In this context, the term "smart grid" is used. By smart grid is meant that the energy provider handles the energy demand by collecting information about both the generated and the consumed energy within the energy network (= grid) in order to achieve a balance between the generated and the consumed energy.

Current smart grid concepts require smart metering for the input to smart grid. Smart metering means that the energy which is consumed at the residential users can be measured remotely, in particular by the energy network operator, alias provider. This includes that the energy network operator can determine from outside the residential user's home the energy consuming behaviour of the residential user in the sense that he gets detailed information about the time and the kind of the energy consuming devices like coffee machine, washing machine, TV etc. which the residential user has activated causing energy consumption. Therefore, many residential users are anxious that smart metering could spy them, at least the residential users feel their privacy not being respected and thus - and for the costs being involved with the installation of smart metering devices - the installation of smart metering technology is delayed or even discarded for the near future.

### Summary of the invention

The present invention aims to improve the energy flow in an energy network.

The objective of the invention is achieved by a method of controlling the consumption of energy according to claim 1.

The objective of the invention is further achieved by a data processing unit according to claim 10.

A home energy box is adapted to allocate an energy consumed at a residential user to tariffs corresponding to tariff information received from an energy network operator and to send data on the consumed energy allocated to the tariffs from the residential user to a retailer. The retailer may be the energy network operator, which provides the energy, in particular if the energy network operator is also responsible for the selling and billing of the energy provided, or to a distinct retailer which is responsible for the selling and billing of the energy, if the two tasks of energy providing on the one hand and of selling/billing on the other hand are fulfilled separately in particular because of the liberalisation of the energy market.

A substation of the energy network is adapted to measure an energy consumption and/or an energy insertion and to send data on the measured energy consumption and/or on the energy insertion to an energy network operator.

It is an advantage of the present invention to provide the smart grid network provider, this is the energy network operator in a smart grid energy network and/or the retailer in the smart grid energy network, with the information required for the smart grid concept without the installation of smart metering technology. Furthermore, it is an advantage of the present invention to enable the energy network operator to take influence on the energy consumption at the residential user, e.g. for economic and/or ecologic reasons.

In a preferred embodiment, the step of managing the demand of energy comprises the step of measuring by one or more measuring units an energy consumption and/or an energy insertion at one or more substations of the energy network, wherein a substation is a part of the energy network where voltage is transformed from high to low and inverse. A substation connects different elements of the energy network. In particular, a substation connects the one or more residential users with the energy network provider, which delivers energy to the residential users via the substation. Additionally, further energy providing elements, can be connected to the substation to deliver energy via the substation to the residential users. These further energy providing elements may be alternative energy generating elements like wind farms or others. At the one or more substations, the energy consumption and the inserted energy are measured and the measuring results are sent to the energy network operator. The one or more substations may therefore be provided with measuring units. The measuring units may measure the energy consumed by the residential users and the energy inserted into the energy network, from in particular the energy network provider, via conventional and/or alternative energy generating units. Furthermore, energy may be inserted by alternative energy generating elements like wind farms and others, which may be built as distinct units, or by energy generating elements within the residential user, e.g. photovoltaic units. The measuring units may provide measuring results according to the measurements.

In a preferred embodiment, the step of managing the demand of energy comprises the step of sending, by the measuring units, measuring results of the measured energy consumption and/or of the measured energy insertion to a data processing unit and generating based on the measuring results a profile of the energy consumption and/or of the energy insertion. The profile may be generated every fifteen minutes or otherwise appropriately timed. The profile may indicate time periods during which a high or a low energy generation and consumption is determined and/or can be expected for the future. For example, for the summer season the profile may indicate that the energy generated by solar plants is higher than in the autumn because of the longer and stronger sun shinning periods. Similarly, the profile may indicate that during specific day hours, the energy consumption by the residential users is higher than during other hours, especially in the day higher than in the night, because normally the residential users activate more energy consuming devices during the day than during the night and during the day similarly certain hours show an augmented energy consumption than other hours. Similarly, details about the energy consuming and generating elements and devices in regard of amount, time, location etc. may be indicated. It has to be noted that the measuring results are generated by the substations due to the measurements implemented at the location of the substation and therefore the profile which is generated shows the energy generation and consumption which is determined at the substation connecting several different elements as described above. Therefore, the measurements are not provided particularly on the level of the residential users, but on a grid level. Therefore, the measuring results are not personalized as in the smart metering concept, as it is provided on the granularity of the grid level.

In a preferred embodiment, the step of managing the demand of energy comprises the steps of generating flexible tariffs according to the generated profile by comparing measured consumed and inserted energy and transmitting tariff information in accordance with the generated flexible tariffs to one or more residential users. In accordance with the generated profile showing time periods of high and low energy generation and consumption, the energy price may be determined, and more generally tariffs may be generated. The tariffs may indicate the energy price in dependence of the time and the amount of the energy consumed. The energy price may be volume based and/or time based, indicating that the energy price varies by the amount consumed and the time of consumption. The tariffs may be built flexibly in the sense that the tariffs may be adapted to the variation of energy consumption and generation depending on a manifold of factors as the behaviour of the residential users, the weather, the energy price of further energy providers which may insert energy from another adjacent energy network. The weather may be responsible for the energy generation and the energy consumption. For example during time periods of high sun shine, more energy may be provided by the photovoltaic elements, but during cold periods more energy may be consumed for the heating of the residential users' homes. Therefore, the tariffs may be flexibly changed according to the measuring results, according to other collected information, in particular about the recent or previous energy consumption and generation and according to expected energy consumption and generation.

In a preferred embodiment, the step of managing the demand of energy comprises the step of transmitting tariff and/or control information via a communication network to a communication unit of the respective residential user, in particular using wired or wireless internet communication, preferably DSL or RF (= radio frequency), or ripple control technology, in particular via web services like e-mail and/or apps (= applications). The control information may concern in particular the energy insertion into the energy network by the residential user in case the residential user is provided with energy generating units such as photovoltaic units and may therefore insert energy into the energy network. In a preferred embodiment, the tariff and control information may be transmitted from the energy network operator to the residential user via push technology, this means that the energy network operator transmits the information on his own incentive to the residential user. In a preferred embodiment, the tariff and control information may be transmitted from the energy network operator to the residential user via pull technology, this means that the residential user requests the transmission of the information from the energy network operator and the transmission is provided consecutively by the energy network operator.

In a preferred embodiment, the step of handling the energy consumption at the residential user comprises the step of installing an electronic meter and/or home energy box for local energy processing. The functions of the electronic meter and/or home energy box and/or of the communication unit can be implemented by a combined device and/or by one or more separate physical devices. The electronic meter and/or home energy box may be used in particular to measure the energy consumption at the residential user, wherein more or less detailed information about the time and device of the energy consumption may be measured and collected. The electronic meter and/or home energy box may implement in particular the functions of measuring the energy consumption at the residential user and of controlling the energy consumption at the residential user which will be described in more detail below.

In a preferred embodiment, the step of handling the energy consumption at the residential user comprises the step of receiving, in particular by a home energy box, tariff information from the energy network operator. The energy network operator may have generated a profile about the energy consumption and generation within the energy network based on the measuring results which have been transmitted from the one or more substations to the energy network operator and accordingly energy tariffs. The tariff information may then be sent to the residential user, where the home energy box may be provided with the tariff and further control information.

In a preferred embodiment, the step of handling the energy consumption at the residential user comprises the steps of collecting information on the energy consumption based on previous and/or predicted energy consumption at the residential user, measuring the energy consumption at the residential user and controlling the energy consumption at the residential user based on collected and measured data and the received tariff information. The information may be detailed according to the energy consuming devices by amount and time of the consumed energy. Similar information may be provided for the energy generating elements, e.g. photovoltaic elements, in case the residential user is provided with such elements.

In a preferred embodiment, the step of handling the energy consumption at the residential user comprises the step of displaying, by the meter and/or home energy box, the energy price based on the received tariff information, wherein a current and/or an accumulated value of the energy price can be displayed, to stimulate the residential user to energy sensitive behaviour, wherein the tariff information comprises preferably time or volume based tariffs. By the time or volume based tariffs the tariffs may be variable in dependence of the time of the energy consumption and/or the amount or volume of the consumed energy. In particular, the energy price may be higher or lower for certain time periods and/or volumes of the energy consumption. In a preferred embodiment, the function of the above mentioned communication unit is implemented also by the electronic meter and/or home energy box. The display of the electronic meter and/or home energy box may show the consumption curve of the energy consumption, eventually the curve of the energy insertion and the further information such as energy price, tariffs, wherein the data in particular about the consumption curve may be re-determined every few seconds or in other appropriate time steps.

In a preferred embodiment, the step of handling the energy consumption at the residential user comprises the step of providing a home automation based on the received tariff information and collected information on the energy consumption at the residential user, wherein devices at the residential user are switched on, if the energy price according to the received tariff information is below a certain threshold, and wherein devices at the residential user are switched off, if the energy price according to the received tariff information is above the certain threshold. Beside the possibility to control manually the energy consumption by switching on or off the energy consuming devices, the residential user may be provided with the possibility of automation by programming the energy consuming devices. Accordingly, the residential user may program the devices so that they are switched on or off during specific time periods deliberately or during time periods when the energy price is below or above a certain value determined by the residential user.

In a preferred embodiment, the step of controlling the local energy consumption comprises the step of programming devices at the residential user so that the devices are switched on during time periods of low tariffs and the devices are switched off during time periods of high tariffs. Equivalently, the residential user may determine such time periods and/or further programming parameters deliberately. In a preferred embodiment, due to the automated control of the energy consuming devices, the devices may be switched on, off and again on in accordance with a period of low tariff, high tariff and low tariff respectively, this means that e.g. in case of a refilling of a car battery, the refilling is provided during a first period of low tariff, the refilling is interrupted during a second period of high tariff and the refilling is restarted during a third period of low tariff (and so on, eventually). The same may apply for other, in particular non time sensitive, energy consuming operations and/or according to the residential users' programmed automation.

In a preferred embodiment, the step of billing the energy consumed at the residential user comprises the steps of measuring the energy consumption at the residential user, allocating the consumed energy to tariffs corresponding to tariff information received from the network operator and sending data on the consumed energy allocated to the tariffs from the residential user to a network operator and/or to a retailer, in particular to a retailer in case the selling and billing is implemented by a retailer distinct from the energy network operator which provides the energy. While the received tariff information is also used to influence and thereby control the energy consuming behaviour of the residential user, the energy consumed at the residential user is equivalently billed according to the tariffs of the energy price. Therefore, the measuring results about the energy consumed at the residential user in accordance with the consumption details such as time and amount may be billed by allocating the consumed energy to the tariffs accordingly.

The objectives, features and advantages of the present invention will become more apparent from the accompanying figures and the following detailed description.

### Brief description of the figures

Fig. 1 is a block diagram depicting the overall structure of a method of controlling the consumption of energy.
Fig. 2 is a schematic diagram depicting a part of an energy network.
Fig. 3 is a schematic diagram depicting a residential user's home.

### Detailed description of the figure

To get a more complete understanding of the present invention an exemplary implementation will be described in the following for illustrative reasons without restricting the scope of the patent which is defined only by the claims.

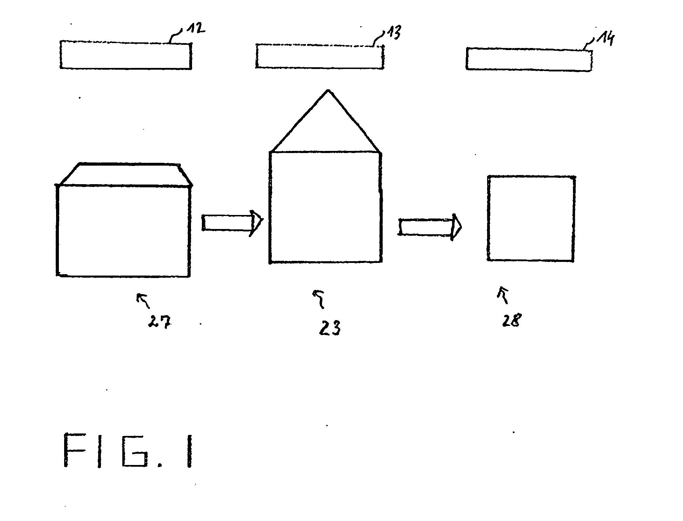

Fig. 1 depicts the overall structure of one exemplary embodiment of the present invention. Fig. 1 shows the steps 12, 13 and 14 of controlling the consumption of energy within the energy network 21, in particular of demand handling within the energy network, handling a local energy consumption and billing the local energy consumption. The network operator 27 manages the demand of energy by managing a balance between the generation and the consumption of energy within the energy network. This step (12) is depicted on the left side of fig. 1. This is done in particular by collecting information about consumed and inserted energy and of generating tariff information, in particular an energy price, and to send the tariff information, which includes in particular flexible tariffs, to the residential user 23. At the residential user 23, the information about flexible tariffs is received from the network operator 27 and the residential user 23 controls his energy consumption in accordance with information on the energy tariffs and on further information, in particular on his energy consuming behaviour by in particular programming energy consuming devices. This step 13 is depicted in the centre of fig. 1. Finally, the energy consumed at the residential user 23 is measured and billed. The billing can be implemented by sending a post-card or in an electronic way, e.g. via an e-mail, for example to a retailer 28. This step 14 is depicted on the right side of fig. 1.

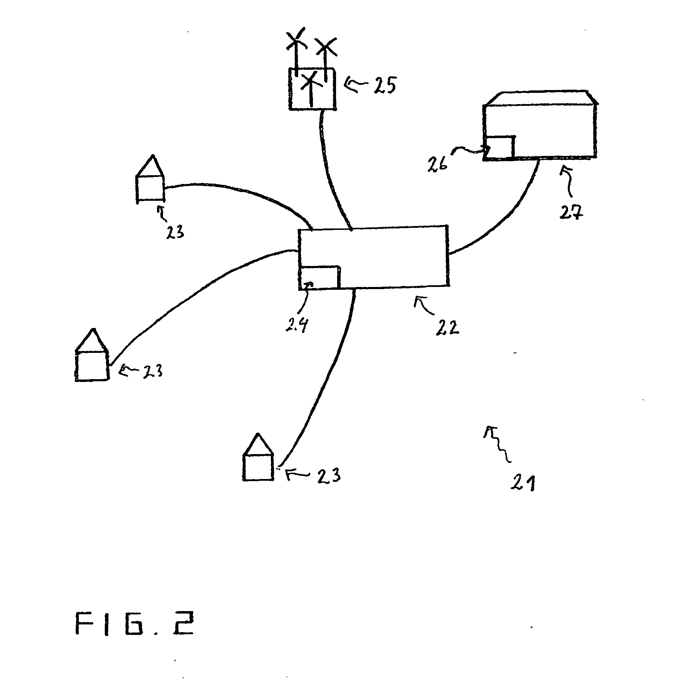

Fig. 2 shows in more detail the part of the energy network 21 comprising in particular a substation 22 and one or more residential users 23. Furthermore, as an example of an energy generating unit, a wind farm 25 is depicted. By one or more measuring units 24, of which for exemplary reasons only one is depicted, the energy consumption and/or the energy insertion at the substation 22 is measured. A substation is a part of an energy network where voltage is transformed from high to low and inverse and is in particular used to connect different energy network elements like residential users and energy generating units like wind farms or conventional energy generating units (carbon, nuclear etc.) of the energy provider of the energy network and/or of adjacent energy providers.

In fig. 2, the measuring unit 24 at the substation 22 measures the energy which is consumed within this part of the energy network, this means in particular by the residential users 23, which are supported with energy via this substation of this part of the energy network 21, and the substation 22 measures furthermore the energy which is inserted into this part of the energy network 21, e. g. by the wind farm 25. It has to be noted that also the residential users 23 as far as they are provided with photovoltaic units or with other energy generating technologies are enabled to generate energy and insert this generated energy into the energy network 21, in particular in case the energy generated by the respective residential users 23 exceeds the energy consumed by said residential users at that moment.

In the following, the measuring unit 24 sends the measuring results of the energy consumed by the residential users 23 and of the energy inserted into the energy network 21 by e.g. the wind farm 25 and/or other energy generating units to a data processing unit 26. The data processing unit 26 may be situated in particular at the energy network operator 27, such as a distribution system operator 27. The energy network operator 27 is responsible to achieve a balance between the generation and the consumption of the energy within the energy network 21. By means of the data processing unit 26 situated at the energy network operator 27, the energy network operator 27 generates a profile of the energy consumption and/or of the energy insertion. It has to be noted that the data that the energy network operator 27 receives at this stage of demand handling refers to the energy generation and consumption which is measured by the substation 22 and by further substations of the energy network equivalently, therefore the data refer to the respective part of the energy network 21 and the data is not supposed to specify the energy consumption and generation of a specific residential user 23. Thereby a personalized profile of the residential user's energy consuming behaviour which is supposed to be regarded as spying the residential user 23 by his energy consuming activities like coffee cooking, watching TV etc. is avoided. The energy network operator 27 is thus merely provided with the data of the energy consumption and generation, this is or the energy consumed and inserted at each specific substation 22 to which a plurality of residential users 23 and/or further energy consuming and/or generating units are connected. The profile, generated on the basis of these measurements at the substation(s), may in particular indicate time periods of high energy consumption and time periods of low energy consumption and also time periods of high energy generation and time periods of low energy generation. By these data, the profile may indicate time periods when the generated energy is supposed to exceed the consumed energy and time periods during which there is the possibility that the energy which is requested by the energy consuming elements of the energy network 21 such as the energy consuming devices at the residential users 23 may exceed the energy which is expected to be generated during said time period which may cause the need for further energy insertion by e.g. the activation of more energy generating elements or by transmitting energy from other elements of the energy network 21 or from outside the energy network 21 and thus from another energy network, this means from energy generating elements at least from outside the considered network part of the energy network 21.

To achieve a balance between the energy consumption and the energy generation, the energy consuming behaviour of the residential users 23 may be influenced, in particular to guide the residential users 23 to an energy sensitive behaviour. In particular during time periods when the requested energy according to energy consumption at the residential users 23 risks to exceed the energy generated by the energy generating elements which are supposed to insert energy into the energy network the energy network operator 27 will try to influence the residential users 23 to consume less energy. In contrast, during time periods when in particular the alternative energy generating elements such as wind farms 25 or photovoltaic elements which are dependent on factors like sun shine or wind strength generate much energy, the energy network operator 27 may try to influence the residential users 23 to request energy during said time periods, with other words to schedule the residential users' energy consumption to these time periods of high energy generation. For example the residential users 23 may be influenced to activate less time sensitive energy consuming devices or applications like washing by means of washing machines, refilling the batteries of electrical cars, if possible, etc. during time periods of high energy generation.

Therefore, the energy network operator 27 may generate flexible tariffs and transmit the tariff information in accordance with the generated flexible tariffs to the residential users 23. The energy network operator 27 may in particular generate the flexible tariffs according to the generated profile by comparing the measured consumed and inserted energy. For time periods during which the generated energy exceeds the consumed energy namely within the considered network part of the energy network 21, in particular exceeds by far the consumed energy, wherein the current and/or predicted energy generation and consumption may be considered, the energy price is low. For time periods during which the residential users 23 request much energy and the energy consumption risks to exceed the generation of energy in this part of the energy network 21 so that energy must be inserted from other network elements outside this energy network part 21 and/or the energy generation has to be augmented, the energy network operator 27 might set the energy price to a high level to influence the residential uses 23 to use less energy during this time period. Consequently the energy network operator 27 transmits the tariff information about the generated flexible tariffs to the residential users 23.

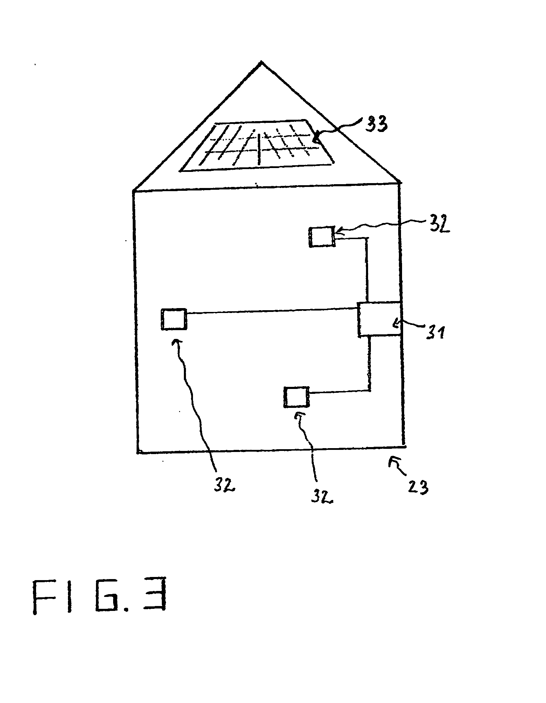

In particular, the tariff and/or control information may be transmitted via a communication network to a communication unit 31 of the respective residential users 23, in particular using wired or wireless internet communication, preferably DSL or RF, or ripple control technology, in particular via web services like e-mail and/or apps (applications). Each residential user 23 may be provided by such kind of communication unit 31. The communication unit 31 of the respective residential user 23 may be one of the functions or parts of an electronic meter and/or home energy box. The communication unit 31 is depicted for exemplary reasons in fig. 3 as part of such an electronic meter and/or home energy box which implements further functions as will be described in the following. The communication unit may be implemented by a separate device in other embodiments.

Fig. 3 shows in more detail one of the residential users 23, and in particular an electronic meter and/or home energy box 31 for local energy processing. Additionally energy consuming devices 32 are depicted such as washing machine, television, coffee machine, computer or any other energy consuming device, household appliance, communication device and other. The function of an electronic meter and/or home energy box 31 may be implemented by a single physical device or may be implemented by two or more physical devices and may also include the function of the communication unit of the communication network over which the residential user receives tariff and/or control information from the energy network operator 27 and/or retailer 28. The electronic meter and/or home energy box 31 is designed to measure the energy consumption of the energy consuming devices and/or of the energy generated by the residential user 23 in case the residential user 23 has energy generating means as photovoltaic elements 33 as depicted for exemplary reasons in fig. 3. The photovoltaic elements 33 or other energy generating units of the residential user 23 may insert the generated energy into the energy network 21 and/or insert the generated energy into the local energy circuits of the residential users 23. Furthermore the energy meter and/or home energy box 31 is designed to control the energy consumption at the residential user 23. By this, the electronic meter and/or home energy box 31 may be used for local energy processing.

In a preferred embodiment, the electronic meter and/or home energy box 31, receives tariff information form the energy network operator 27. Furthermore, in the exemplary example depicted in fig. 3, the electronic meter and/or home energy box 31 is used to collect information on the energy consumption based on previous and/or predicted energy consumption at the residential user 23, measure the energy consumption and/or generation at the residential user 23 and control the energy consumption at the residential user 23 based on the collected and measured data and the received tariff information. In particular, the electronic meter and/or home energy box 31 displays the energy price based on the received tariff information. A current and/or an accumulated value of the energy price can be displayed. The tariff information comprises preferably time or volume based tariffs. As already mentioned, one objective of flexible tariffs is to stimulate the residential user 23 to energy sensitive behaviour, this means to consume less energy during time periods of low energy production within the energy network 21 and to schedule his energy consumption during time periods of high energy production within the energy network 21.

In particular, the energy consumption at the residential user 23 is handled by providing a home automation based on the received tariff information and collected information on the energy consumption and/or energy generation at the residential user 23. For example, devices 32 at the residential user 23 are switched on, if the energy price according to the received tariff information is below a certain threshold, and devices at the residential user 23 are switched off, if the energy price according to the received tariff information is above a certain threshold. This means that the tariff information is used correspondingly also to control the energy consumption at the residential users 23 and therefore within energy network. By this implementation, the energy network operator based on his knowledge of the measuring results of energy consumption and generation and energy insertion within the energy network 21, may control the energy consumption at the residential users 23 via the tariff, in particular the energy price. Therefore the method of controlling the energy consumption is implemented in an impersonalized way from the energy network operator's point of view avoiding the necessity of smart metering and the above mentioned disadvantages as spying and costs.

In particular, the local energy consumption may be controlled at and by the residential user's home - based on the received tariff information and collected further information as mentioned above - by programming devices 32 at the residential user 23 so that the devices 32 are switched on during time periods of low tariffs and the devices 32 are switched off during time periods of high tariffs. In a preferred embodiment, the data of energy consumption is allocated to the tariffs in defined time intervals in the electronic meter and/or home energy box 31 at the residential user 23, and wherein the data could be checked by the residential user 23.

In particular, the energy consumed at the residential user 23 may be billed by measuring the energy consumption at the residential user 23, allocating the consumed energy to tariffs corresponding to tariff information received from the energy network operator 27 and send data on the consumed energy allocated to the tariffs from the residential user 23 to a retailer 28. In an exemplary embodiment, the data on the consumed energy allocated to the tariffs is sent from the residential user 23 to the retailer 28 once per month or once per year and wherein the data is sent in an electronic way or via a postcard.

## Claims

1. A method of controlling the consumption of energy, the method comprising the steps of
managing (12) the demand of energy by managing a balance between a generation and a consumption of energy in an energy network (21),
wherein the step of managing the demand of energy comprises the steps of:
measuring by one or more measuring units (24) an energy consumption and/or an energy insertion at one or more substations (22) of the energy network (21), wherein a substation (22) is a part of the energy network (21) where voltage is transformed from high to low and inverse;
sending, by the measuring units (24), measuring results of the measured energy consumption and/or of the measured energy insertion to a data processing unit (26);
generating based on the measuring results a profile of the energy consumption and/or of the energy insertion;
generating flexible tariffs according to the generated profile by comparing measured consumed and inserted energy; and
transmitting tariff information in accordance with the generated flexible tariffs to one or more residential users (23);
handling (13) a local energy consumption at a residential user (23); and billing (14) a local energy consumed at the residential user (23).

2. The method according to claim 1, wherein the step of managing the demand of energy comprises the step of
transmitting tariff and/or control information via a communication network to a communication unit (31) of the respective residential user (23), in particular using wired or wireless internet communication, preferably DSL or RF, or ripple control technology, in particular via web services like e-mail and/or apps.

3. The method according to claim 1, wherein the step of handling the energy consumption at the residential user (23) comprises the step of
installing an electronic meter and/or home energy box (31) for local energy processing.

4. The method according to claim 1, wherein the step of handling the energy consumption at the residential user (23) comprises the step of
receiving, in particular by a home energy box (31), tariff information from the energy network operator (27).

5. The method according to claim 4, wherein the step of handling the energy consumption at the residential user (23) comprises the steps of
collecting information on the energy consumption based on previous and/or predicted energy consumption at the residential user (23);
measuring the energy consumption at the residential user (23); and controlling the energy consumption at the residential user (23) based on collected and measured data and the received tariff information.

6. The method according to claim 4, wherein the step of handling the energy consumption at the residential user (23) comprises the step of
displaying, by an electronic meter and/or home energy box (31), the energy price based on the received tariff information, wherein a current and/or an accumulated value of the energy price can be displayed, to stimulate the residential user (23) to energy sensitive behaviour, wherein the tariff information comprises preferably time or volume based tariffs.

7. The method according to claim 4, wherein the step of handling the energy consumption at the residential user (23) comprises the step of
providing a home automation based on the received tariff information, wherein devices (32) at the residential user (23) are switched on, if the energy price according to the received tariff information is below a certain threshold, and wherein devices (32) at the residential user are switched off, if the energy price according to the received tariff information is above the certain threshold.

8. The method according to claim 4 or 5, wherein the step of controlling the local energy consumption comprises the step of
programming devices (32) at the residential user (23) so that the devices (32) are switched on during time periods of low tariffs and the devices are switched off during time periods of high tariffs.

9. The method according to claim 1, wherein the step of billing the energy consumed at the residential user (23) comprises the steps of
measuring the energy consumption at the residential user (23); allocating the consumed energy to tariffs corresponding to tariff information received from the network operator (27); and
sending data on the consumed energy allocated to the tariffs from the residential user (23) to a retailer (28).

10. A data processing unit (26) adapted to receive measuring data about consumed energy and energy insertion from one or more measuring units (24) at one or more substations (22) that is a part of an energy network (21), the data processing unit (26) being adapted to:
- generate a profile of the energy consumption and/or of the energy insertion, based on the received measuring results,
- generate flexible tariffs according to the generated profile, by comparing measured consumed and inserted energy,
- and transmit tariff information, in accordance with the generated flexible tariffs, to one or more residential users (23).

## Patentansprüche

1. Verfahren zur Steuerung des Energieverbrauchs, wobei das Verfahren die folgenden Schritte umfasst:
Verwalten (12) des Energiebedarfs durch Verwalten eines Gleichgewichts zwischen einer Erzeugung und einem Verbrauch von Energie in einem Energienetzwerk (21),
wobei der Schritt des Verwaltens des Energiebedarfs die folgenden Schritte umfasst:
Messen, anhand eines oder mehrerer Messgeräte (24), eines Energieverbrauchs und/oder einer Energieeinbringung an einer oder mehreren Unterstationen (22) des Energienetzwerks (21), wobei die Spannung von hoch und niedrig und umgekehrt umgewandelt wird;
Senden, durch die Messgeräte (24), der Messergebnisse des gemessenen Energieverbrauchs und/oder der gemessenen Energieeinbringung an eine Datenverarbeitungsvorrichtung (26);
Erzeugen, auf der Basis der Messergebnisse, eines Profils des Energieverbrauchs und/oder der Energieeinbringung;
Erzeugen von flexiblen Tarifen gemäß dem erzeugten Profil durch Vergleichen der gemessenen verbrauchten und eingebrachten Energie; und
Übertragen der Tarifinformationen entsprechend den erzeugten flexiblen Tarifen an einen oder mehrere Privatnutzer (23);
Handhaben (13) eines lokalen Energieverbrauchs am Standort eines Privatnutzers (23); und
Abrechnen (14) einer durch den Privatnutzer (23) lokal verbrauchten Energie.

2. Verfahren nach Anspruch 1, wobei der Schritt des Verwaltens des Energiebedarfs den folgenden Schritt umfasst:
Übertragen von Tarif- und/oder Kontrollinformationen über ein Kommunikationsnetzwerk an ein Kommunikationsgerät (31) des jeweiligen Privatnutzers (23), insbesondere unter Verwendung der leitungsgebundenen oder drahtlosen Internetkommunikation, vorzugsweise DSL oder RF oder Rundsteuertechnologie, insbesondere über Webdienste wie beispielsweise E-Mail und/oder Apps.

3. Verfahren nach Anspruch 1, wobei der Schritt des Handhabens des Energieverbrauchs am Standort des Privatnutzers (23) den folgenden Schritt umfasst:
Installieren eines elektronischen Zählers und/oder einer Heim-Energiebox (31) für die lokale Energieverarbeitung.

4. Verfahren nach Anspruch 1, wobei der Schritt des Handhabens des Energieverbrauchs am Standort des Privatnutzers (23) den folgenden Schritt umfasst:
Empfangen, insbesondere an einer Heim-Energiebox (31), von Tarifinformationen von dem Energienetzwerkbetreiber (27).

5. Verfahren nach Anspruch 4, wobei der Schritt des Handhabens des Energieverbrauchs am Standort des Privatnutzers (23) die folgenden Schritte umfasst:
Erfassen von Informationen über den Energieverbrauch auf der Basis eines vorherigen und/oder vorausberechneten Energieverbrauchs am Standort des Privatnutzers (23);
Messen des Energieverbrauchs am Standort des Privatnutzers (23); und
Kontrollieren des Energieverbrauchs am Standort des Privatnutzers (23) auf der Basis der erfassten und gemessenen Daten und der empfangenen Tarifinformationen.

6. Verfahren nach Anspruch 4, wobei der Schritt des Handhabens des Energieverbrauchs am Standort des Privatnutzers (23) den folgenden Schritt umfasst:
Anzeigen, an einem elektronischen Zähler und/oder einer Heim-Energiebox (31), des Energiepreises auf der Basis der empfangenen Tarifinformationen, wobei ein aktueller und/oder aufakkumulierter Wert des Energiepreises angezeigt werden kann, um den Privatnutzer (23) zu einem energiebewussten Verhalten anzuleiten, wobei die Tarifinformationen vorzugsweise auf der Zeit oder dem Volumen basierende Tarife umfassen.

7. Verfahren nach Anspruch 4, wobei der Schritt des Handhabens des Energieverbrauchs am Standort des Privatnutzers (23) den folgenden Schritt umfasst:
Bereitstellen eines Hausautomationssystems auf der Basis der empfangenen Tarifinformationen, wobei Vorrichtungen (32) am Standort des Privatnutzers (23) eingeschaltet werden, wenn der Energiepreis gemäß den empfangenen Tarifinformationen unter einem bestimmten Grenzwert liegt, und wobei Vorrichtungen (32) am Standort des Privatnutzers ausgeschaltet werden, wenn der Energiepreis gemäß den empfangenen Tarifinformationen über einem bestimmten Grenzwert liegt.

8. Verfahren nach Anspruch 4 oder 5, wobei der Schritt des Kontrollierens des lokalen Energieverbrauchs den folgenden Schritt umfasst:
Programmieren von Vorrichtungen (32) am Standort des Privatnutzers (23), so dass die Vorrichtungen (32) während Zeiträumen mit niedrigem Tarif eingeschaltet werden und die Vorrichtungen während Zeiträumen mit hohem Tarif ausgeschaltet werden.

9. Verfahren nach Anspruch 1, wobei der Schritt des Abrechnens der am Standort des Privatnutzers (23) verbrauchten Energie die folgenden Schritte umfasst:
Messen des Energieverbrauchs am Standort des Privatnutzers (23);
Zuordnen der verbrauchten Energie zu Tarifen, die den von dem Netzwerkbetreiber (27) empfangenen Tarifinformationen entsprechen; und
Senden der Daten der den Tarifen zugeordneten verbrauchten Energie von dem Privatnutzer (23) an einen Energieversorger (28).

10. Datenverarbeitungseinheit (26), ausgelegt für den Empfang von Messdaten über verbrauchte Energie und Energieeinbringung von einer oder mehreren Messeinheiten (24) an einer oder mehreren Unterstationen (22), welche Teil eines Energienetzwerks (21) sind, wobei die Datenverarbeitungseinheit (26) für Folgendes ausgelegt ist:
Erzeugen eines Profils des Energieverbrauchs und/oder der Energieeinbringung auf der Basis der empfangenen Messergebnisse,
Erzeugen von flexiblen Tarifen gemäß dem erzeugten Profil durch Vergleichen der gemessenen verbrauchten und eingebrachten Energie; und
und Übertragen der Tarifinformationen entsprechend den erzeugten flexiblen Tarifen an einen oder mehrere Privatnutzer (23).

## Revendications

1. Procédé de contrôle de la consommation d'énergie, le procédé comprenant les étapes suivantes
gérer (12) la demande d'énergie en gérant un équilibre entre une production et une consommation d'énergie dans un réseau d'énergie (21),
dans lequel l'étape de gestion de la demande d'énergie comprend les étapes suivantes :
mesurer au moyen d'une ou de plusieurs unités de mesure (24) une consommation d'énergie et/ou une insertion d'énergie au niveau d'une ou de plusieurs sous-stations (22) du réseau d'énergie (21), dans lequel une sous-station (22) fait partie du réseau d'énergie (21) où la tension passe d'une haute tension à une basse tension et inversement ;
envoyer, au moyen des unités de mesure (24), les résultats de mesure de la consommation d'énergie mesurée et/ou de l'insertion d'énergie mesurée à une unité de traitement des données (26) ;
générer, en fonction des résultats de mesure, un profil de la consommation d'énergie et/ou de l'insertion d'énergie ;
générer des tarifs flexibles conformément au profil généré en comparant l'énergie consommée et l'énergie insérée mesurées ; et
transmettre les informations tarifaires conformément aux tarifs flexibles générés à un ou plusieurs utilisateurs résidentiels (23) ;
gérer (13) une consommation d'énergie locale au niveau d'un utilisateur résidentiel (23) ; et
facturer (14) une énergie locale consommée au niveau de l'utilisateur résidentiel (23).

2. Procédé selon la revendication 1, dans lequel l'étape de gestion de la demande d'énergie comprend l'étape suivante
transmettre des informations tarifaires et/ou de contrôle par l'intermédiaire d'un réseau de communication à une unité de communication (31) de l'utilisateur résidentiel respectif (23), en particulier au moyen d'une communication Internet filaire ou sans fil, de préférence DSL ou RF, ou d'une technologie de télécommande centralisée, en particulier par l'intermédiaire de services Web tels que le courrier électronique et/ou des applications.

3. Procédé selon la revendication 1, dans lequel l'étape de gestion de la consommation d'énergie au niveau de l'utilisateur résidentiel (23) comprend l'étape suivante
installer un compteur électronique et/ou un boîtier d'énergie domestique (31) pour le traitement d'énergie locale.

4. Procédé selon la revendication 1, dans lequel l'étape de gestion de la consommation d'énergie au niveau de l'utilisateur résidentiel (23) comprend l'étape suivante
recevoir, en particulier au moyen d'un boîtier d'énergie domestique (31), des informations tarifaires de l'opérateur du réseau d'énergie (27).

5. Procédé selon la revendication 4, dans lequel l'étape de gestion de la consommation d'énergie au niveau de l'utilisateur résidentiel (23) comprend les étapes suivantes
collecter des informations sur la consommation d'énergie basées sur la consommation d'énergie antérieure et/ou prévue au niveau de l'utilisateur résidentiel (23) ;
mesurer la consommation d'énergie au niveau de l'utilisateur résidentiel (23) ; et
contrôler la consommation d'énergie au niveau de l'utilisateur résidentiel (23) en fonction des données collectées et mesurées et des informations tarifaires reçues.

6. Procédé selon la revendication 4, dans lequel l'étape de gestion de la consommation d'énergie au niveau de l'utilisateur résidentiel (23) comprend l'étape suivante
afficher, au moyen d'un compteur électronique et/ou d'un boîtier d'énergie domestique (31), le prix de l'énergie en fonction des informations tarifaires reçues, dans lequel une valeur de courant et/ou cumulée du prix de l'énergie peut être affichée, pour stimuler le comportement de l'utilisateur résidentiel (23) vis-à-vis de l'économie d'énergie, dans lequel les informations tarifaires comprennent de préférence des tarifs basés sur le temps ou le volume.

7. Procédé selon la revendication 4, dans lequel l'étape de gestion de la consommation d'énergie au niveau de l'utilisateur résidentiel (23) comprend l'étape suivante
fournir une domotique en fonction des informations tarifaires reçues, dans lequel les dispositifs (32) au niveau de l'utilisateur résidentiel (23) sont activés, si le prix de l'énergie, en fonction des informations tarifaires reçues, est inférieur à un certain seuil, et dans lequel les dispositifs (32) au niveau de l'utilisateur résidentiel sont désactivés, si le prix de l'énergie, en fonction des informations tarifaires reçues, est supérieur au certain seuil.

8. Procédé selon la revendication 4 ou 5, dans lequel l'étape de contrôle de la consommation d'énergie locale comprend l'étape suivante
programmer des dispositifs (32) au niveau de l'utilisateur résidentiel (23) de sorte que les dispositifs (32) soient activés durant des périodes de tarifs bas et que les dispositifs soient désactivés durant des périodes de tarifs élevés.

9. Procédé selon la revendication 1, dans lequel l'étape de facturation de l'énergie consommée au niveau de l'utilisateur résidentiel (23) comprend les étapes suivantes
mesurer la consommation d'énergie au niveau de l'utilisateur résidentiel (23) ;
attribuer l'énergie consommée aux tarifs correspondant aux informations tarifaires provenant de l'opérateur de réseau (27) ; et
envoyer des données sur l'énergie consommée attribuée aux tarifs à partir de l'utilisateur résidentiel (23) vers un revendeur (28).

10. Unité de traitement de données (26), adaptée pour recevoir des données de mesure sur l'énergie consommée et l'insertion d'énergie à partir d'une ou de plusieurs unités de mesure (24) au niveau d'une ou de plusieurs sous-stations (22), qui fait partie d'un réseau d'énergie (21), l'unité de traitement de données (26) étant adaptée pour :
- générer un profil de la consommation d'énergie et/ou de l'insertion d'énergie, en fonction des résultats de mesure reçus,
- générer des tarifs flexibles conformément au profil généré, en comparant l'énergie consommée et l'énergie insérée mesurées,
- et transmettre des informations tarifaires, conformément aux tarifs flexibles générés, à un ou plusieurs utilisateurs résidentiels (23).
